Europäisches Patentamt

European Patent Office

Office européen des brevets

(11) Numéro de publication: **0 266 814 B1**

## FASCICULE DE BREVET EUROPEEN

(45) Date de publication de fascicule du brevet:
12.06.91

(51) Int. Cl.5: **G01N 21/21, G01N 21/03**

(21) Numéro de dépôt: **87201919.5**

(22) Date de dépôt: **07.10.87**

(54) **Porte échantillon pour un ellipsomètre spectroscopique à haute résolution latérale.**

(30) Priorité: **10.10.86 FR 8614124**

(43) Date de publication de la demande:
**11.05.88 Bulletin  88/19**

(45) Mention de la délivrance du brevet:
**12.06.91 Bulletin  91/24**

(84) Etats contractants désignés:
**DE FR GB IT NL**

(56) Documents cités:
**US-A- 2 947 214**
**US-A- 3 564 240**
**US-A- 3 566 112**
**US-A- 4 210 401**

**JOURNAL OF SCIENTIFIC INSTRUMENTS, vol. 6, no. 10, octobre 1973, pages 968-969, London, GB; M. BIGET et al.: "A simple set-up for the oriented cutting of single-crystal specimens"**

(73) Titulaire: **LABORATOIRES D'ELECTRONIQUE PHILIPS**
**3, Avenue Descartes**
**F-94450 Limeil-Brévannes(FR)FR**

Titulaire: **N.V. Philips' Gloeilampenfabrieken**
**Groenewoudseweg 1**
**NL-5621 BA Eindhoven(NL)DE GB IT NL**

(72) Inventeur: **Le Bris, Jean Société Civile S.P.I.D.**
**209, rue de l'Université**
**F-75007 Paris(FR)**
Inventeur: **Erman, Marko Société Civile S.P.I.D.**
**209, rue de l'Université**
**F-75007 Paris(FR)**

(74) Mandataire: **Jacquard, Philippe et al**
**Société Civile S.P.I.D. 156, Boulevard Haussmann**
**F-75008 Paris(FR)**

## Description

La présente invention a pour objet un ellipsomètre spectroscopique comportant un dispositif d'éclairement présentant un point focal d'éclairement d'une surface d'un échantillon selon un angle d'incidence donné, un dispositif d'analyse de la lumière réfléchie par la surface de l'échantillon ainsi qu'un porte-échantillon permettant d'amener un point de la surface de l'échantillon en coïncidence avec ledit point focal. Un ellipsomètre du même type est décrit dans US-A-4210401.

En ellipsométrie classique, on opère en ondes planes avec une ouverture angulaire du faisceau lumineux n'excédant pas 1°. L'article "High Precision Scanning Ellipsometer" de D.E. ASPNES paru dans la revue Applied Opties en Janvier 1975 se rapporte à un tel ellipsomètre.

On connaît également des techniques ellipsométriques dans laquelle on opère en lumière convergente dans le but d'obtenir à la fois une bonne sensibilité à l'état de surface de l'échantillon et une résolution latérale élevée. L'article "Geometrical Resolution in the comparison ellipsometer" de STIBLERT et al. paru dans le Journal de Physique (Colloque C10, supplément au n° 12, tome 44, déc. 1983) décrit un ellipsomètre par comparaison dans lequel l'échantillon est éclairé par une tache lumineuse dont la dimension est d'environ 2 microns. La sensibilité à l'état de surface est conditionné par la présence d'ondes planes présentant un état défini de polarisation, alors que la résolution latérale ne peut quant à elle être obtenue que par un système optique de focalisation qui contredit à la fois les concepts d'onde plane et d'angle d'incidence unique. Dans l'article précité, la résolution latérale de l'ordre de 2 microns est obtenue au prix d'une résolution en profondeur peu satisfaisante.

L'analyse de la perturbation des mesures due à la mise en oeuvre de rayons convergents a permis à la Demanderesse de calculer un compromis aboutissant à la conception d'un ellipsomètre du type à analyseur tournant présentant une bonne précision pour les deux paramètres précités. Ce compromis consiste à choisir une résolution latérale de l'ordre de 10 x 10 microns avec une ouverture angulaire du faisceau incident de l'ordre de 4 à 5 degrés, ce qui permet de conserver une sensibilité à l'état de surface meilleure que l'Angström.

Pour de telles valeurs de l'ouverture angulaire, l'onde ne pouvant plus être considérée comme plane, l'interprétation des résultats nécessite un nouveau formalisme de calcul.

En ellipsométrie classique, on mesure le rapport de réflectance complexe $\rho$ :

$$\rho = R_p R_s^{-1} = \tan \psi \exp(i\Delta) \quad (1)$$

$R_p$ et $R_s$ désignant les coefficients de réflexion d'ondes polarisées linéairement ayant leur polarisation respectivement parallèle et perpendiculaire au plan d'incidence.

Un ellipsomètre à analyseur tournant permet de mesurer directement $\tan \psi$ et $\cos \Delta$. Il vient :

$$\tan \Psi = \left| \left| \frac{R_p}{R_s} \right| \right| \quad (2)$$

$$\cos \Delta = \frac{R_e (R_p \cdot \bar{R}_s)}{||(R_p \cdot R_s)||} \quad (3)$$

$R_e$ étant la partie réelle d'un nombre complexe.

Dans le cas d'une onde non plane, il faut tenir compte notamment du fait que les coefficients $R_p$ et $R_s$ dépendent de l'angle d'incidence $\theta$. On décompose le faisceau lumineux incident en une somme d'ondes planes et on désigne par g la transformée du Fourier de sa distribution et par g' celle du faisceau réfléchi et collecté.

Il vient alors en lumière cohérente et pour un échantillon homogène, le signe * désignant un produit de convolution :

$$\tan \Psi = \frac{||[R_p(\theta) * g \cdot g'(\theta)](\theta_0)||}{||[R_s(\theta) * g \cdot g'(\theta)](\theta_0)||} \quad (4)$$

avec $\theta_0$ = angle d'incidence moyenne.

EP 0 266 814 B1

et

$$\cos \Delta = \frac{R_e[R_p(\theta) \ast g.g'(\theta).(\bar{R}_s(\theta) \ast \bar{g}.\bar{g}'(\theta)](\theta_O)}{||R_p(\theta) \ast g.g'(\theta)|| . ||R_s(\theta) \ g.g'(\theta)||(\theta_O)} \quad (5)$$

Les formules se déduisent donc des précédentes en remplaçant tous les coefficients de réflexion par leur produit de convolution avec la fonction $g.g'(\theta)$.

En lumière incohérente et pour un échantillon homogène, les formules deviennent :

$$\tan \Psi = \left( \frac{||R_p(\theta)||^2 \ast ||g.g'(\theta)||^2(\theta_O)}{||R_s(\theta)||^2 \ast ||g.g'(\theta)||^2(\theta_O)} \right)^{\frac{1}{2}} \quad (6)$$

$$\cos \Delta = \frac{R_e(R_p(\theta).\bar{R}_s(\theta) \ast ||g.g'(\theta)||^2)(\theta_O)}{(A.B)^{\frac{1}{2}}} \quad (7)$$

$$\text{avec } A = ||R_p(\theta)||^2 \ast ||g.g'(\theta)||^2(\theta_O)$$

$$B = ||R_s(\theta)||^2 \ast ||g.g'(\theta)||^2(\theta_O)$$

On remarquera que, dans le cas d'une onde plane, $g = g' = 1$ pour $\theta = \theta_o$ et 0 pour $\theta \# \theta_o$, et les formules (4) et (6) d'une part et (5) et (7) d'autre part se réduisent bien entendu aux formules (2) et (3).

Il est très important de pouvoir réaliser avec un tel ellipsomètre des cartographies d'un échantillon, par balayage linéaire ou bi-dimensionnel de l'échantillon à longueur d'onde constante. L'analyse de telles cartographies se fait principalement en étudiant la distribution des points dans le plan ($\tan\psi$, $\cos \Delta$), les points expérimentaux formant des trajectoires spatiales pouvant être confrontés à des trajectories théoriques correspondant à un ensemble de points calculés pour un modèle de structure donnée obtenu en faisant varier un des paramètres relié à la structure. Si ce paramètre est l'épaisseur d'une couche, on obtient une trajectoire dite d'épaisseur.

L'ellipsomètre classique ne se préoccupe pas de la réalisation de telles cartographies, et les porte-échantillons des ellipsomètres connus ne sont pas conçus pour permettre le balayage de l'échantillon nécessaire à la réalisation de cartographies. On connaît également des portes-échantillons pour la cristallographie (US 2947214) ou pour la diffraction de rayons X (gomomètre selon US 3564240), mais de tels dispositifs ne sont pas adaptés à la réalisation de cartographies ellipsométriques.

La présente invention a pour objet un éllipsomètre spectroscopique comportant un porte-échantillon permettant de réaliser des cartographies telles que celles mentionnées ci-dessus.

Dans ce but il est caractérisé en ce qu'il comporte trois platines de translation, à savoir une première platine selon une première direction, une deuxième platine selon une deuxième direction perpendiculaire à la précédente et horizontale, destinées à la réalisation de cartographies de l'échantillon, ainsi qu'une troisième platine de translation selon une troisième direction perpendiculaire aux deux autres directions et destinée à placer un point de la surface de l'échantillon en coïncidence avec le point focal d'éclairement, en ce qu'il comporte au moins deux platines tournantes, une première autour d'un premier axe parallèle à la deuxième direction horizontale et une deuxième, autour d'un deuxième axe parallèle à ladite première direction, ces deux axes se coupant en un point coïncidant avec ledit point focal d'éclairement, de telle sorte que l'échantillon puisse être orienté par rotation dans deux plans orthogonaux autour dudit point focal.

Le porte échantillon peut être ainsi positionné en agissant sur la troisième platine de translation et sur les première et deuxième platines tournantes, la cartographie étant alors possible grâce aux première et deuxième platines de translation.

Selon un mode de réalisation, le porte-échantillon est monté sur un support rotatif d'axe vertical passant par ledit point focal, et sur lequel est monté ledit dispositif d'analyse, de telle sorte que l'angle d'incidence puisse être modifié.

Selon un autre mode de réalisation, le porte-échantillon comporte une troisième platine tournante supportant l'échantillon et comportant un troisième axe de rotation perpendiculaire aux premier et deuxième axes, de manière à permettre une rotation de l'échantillon dans son plan.

3

Selon une autre variante de réalisation, la deuxième platine tournante est montée directement sur la première platine tournante, et les deuxième et troisième platines de translation sont superposées dans cet ordre sur la deuxième platine tournante, la troisième platine de translation supportant la première platine de translation qui porte l'échantillon, éventuellement par l'intermédiaire de la troisième platine tournante qui lui est solidaire.

L'invention sera mieux comprise à la lecture de la description qui va suivre à titre d'exemple non limitatif en liaison avec les figures qui représentent :
- la figure 1, les composantes d'un champ incident et réfléchi sur une surface plane,
- la figure 2, un monochromateur utilisable dans un ellipsomètre selon l'invention,
- la figure 3, un bras d'éclairement selon l'invention,
- la figure 4, un porte-échantillon utilisable dans un ellipsomètre selon l'invention et conçu de manière à permettre la réalisation de cartographies,
- et la figure 5, un bras d'analyse comportant le porte-échantillon et un système de détection.

L'ellipsométrie est une méthode optique de caractérisation qui est habituellement utilisée en réflexion, en incidence oblique. Contrairement à une mesure de réflectivité, elle ne mesure pas la valeur absolue d'une intensité, mais cherche à déterminer un état de polarisation de la lumière. La réponse du gaz d'électrons est en effet différente selon que le vecteur champ électrique de l'onde incidente est parallèle ou orthogonal au plan d'incidence.

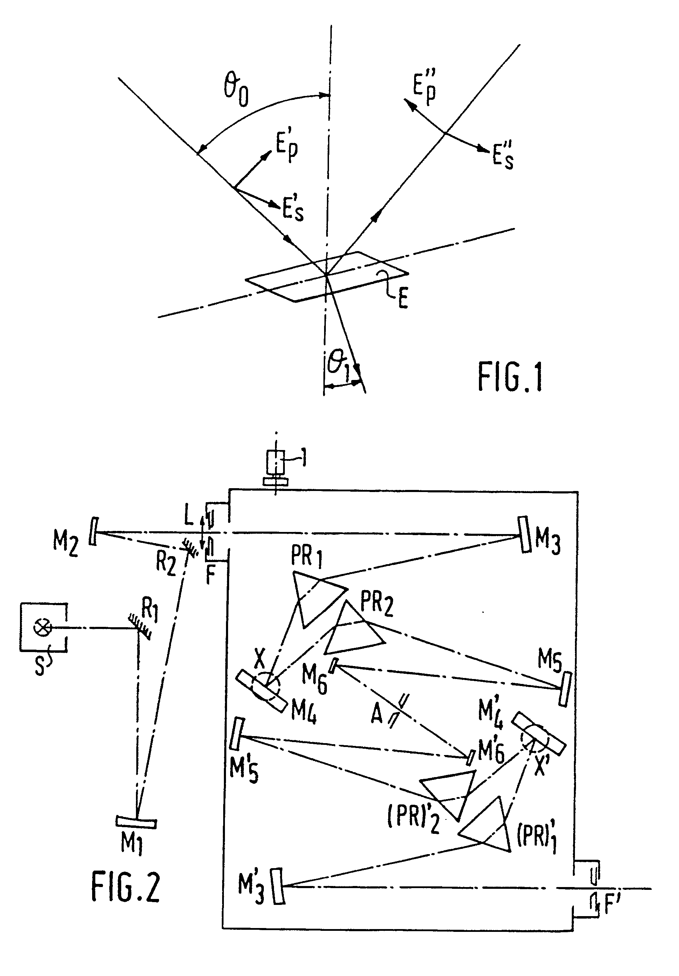

Une onde plane de polarisation $E'_p$ parallèle au plan d'incidence et formant un angle $\theta_o$ avec la normale à la surface d'un échantillon (figure 1) est réfléchie sous la forme d'une onde présentant une polarisation $E''_p$ ayant subi une rotation de $\delta_p$ par rapport à l'onde incidente. De même, une onde plane de polarisation $E'_s$ perpendiculaire au plan d'incidence est réfléchie sous la forme d'une onde présentant une polarisation $E''_s$ ayant subi une rotation $\delta_s$ par rapport à l'onde incidente.

Les coefficients $R_p$ et $R_s$, voir formule (1), sont définis par les rapports :

$$R_p = \frac{E''_p}{E'_p} = |R_p| \, e^{i\delta_p}$$

$$R_s = \frac{E''_s}{E'_s} = |R_s| \, e^{i\delta_s}$$

Les coefficients étant, pour un échantillon homogène, le coefficients de Fresnel, il en résulte que $\rho$ est fonction de l'angle d'incidence ainsi que des propriétés optiques de l'échantillon et donc de la longueur d'onde. Dans le cas d'un échantillon non homogène, pouvant être représenté par une structure stratifiée, $\rho$ est fonction des propriétés optiques de chaque couche et de leurs épaisseurs. Dans le cas d'un échantillon spatialement non homogène, $\rho$ est de plus fonction des coordonnées latérales de l'échantillon. Ces considérations montrent que le nombre de paramètres inconnus peut devenir rapidement très important.

En général, une mesure ellipsométrique à longueur d'onde fixe ne permet pas une analyse assez fine de l'échantillon. Il est donc intéressant d'utiliser un autre paramètre, et dans le cas d'espèce, il s'agit de la longueur d'onde. Il s'agit donc d'ellipsométrie spectroscopique.

La figure 2 décrit un monochromateur à prismes présentant une résolution spectrale élevée et convenant particulièrement à l'application envisagée. Il comporte comme source lumineuse S une lampe au Xénon de 900 W. Une telle lampe présente outre une bonne stabilité, un fond continu intense dans une large gamme allant de l'infrarouge (quelques microns) jusqu'à l'ultraviolet (environ 0,22 micron).

La fente d'entrée F du monochromateur est éclairée par un montage optique du type KOHLER. Ce montage permet d'obtenir un éclairement uniforme. Il comporte deux miroirs sphériques $M_1$ et $M_2$. Le premier miroir $M_1$ projette l'image de l'arc de la source S sur le miroir $M_2$. Ce dernier conjugue le miroir $M_1$ sur la fente d'entrée F du monochromateur. Deux miroirs plans $R_1$ et $R_2$ permettent de conserver un angle d'incidence faible (environ 5°) sur les miroirs sphériques $M_1$ et $M_2$. Une lentille L, placée contre la fente d'entrée F permet de projeter l'image de l'arc formée sur le miroir $M_2$ au voisinage de l'infini dans le monochromateur.

Les éléments dispersifs utilisés sont constitués par quatre prismes doubles en quartz naturel $PR_1$, $PR_2$, $PR'_2$, $PR'_1$. Ce montage est équivalent à deux monochromateurs simples $(PR_1, PR_2)$ et $(PR'_1, PR'_2)$ disposés de manière symétrique par rapport à une fente centrale A. Des miroirs concaves, $M_3$ en amont du prisme $PR_1$ et $M_5$ en aval du prisme $PR_2$ pour le premier monochromateur simple, et $M'_5$ en amont du prisme $PR'_2$ et $M'_3$ en aval du prisme $PR'_1$ pour le deuxième monochromateur simple, constituent deux montages dits

4

en Z à angles d'incidence égaux. Le montage permet de conjuguer la fente d'entrée F, la fente centrale A et la fente de sortie F'. La sélection de la longueur d'onde est réalisée grâce à deux miroirs plans respectivement $M_4$ disposé en aval du prisme $PR_1$ et en amont du prisme $PR_2$, et $M'_4$ disposé en aval du prisme $PR'_2$ et en amont du prisme $PR'_1$. Un moteur pas à pas 1 entraîne en rotation simultanée les miroirs $M_4$ et $M'_4$ par l'intermédiaire d'une démultiplication mécanique. Le moteur pas à pas 1 est commandé par un ordinateur suivant une loi de calibration précise permettant une linéarisation de la commande de longueur d'onde.

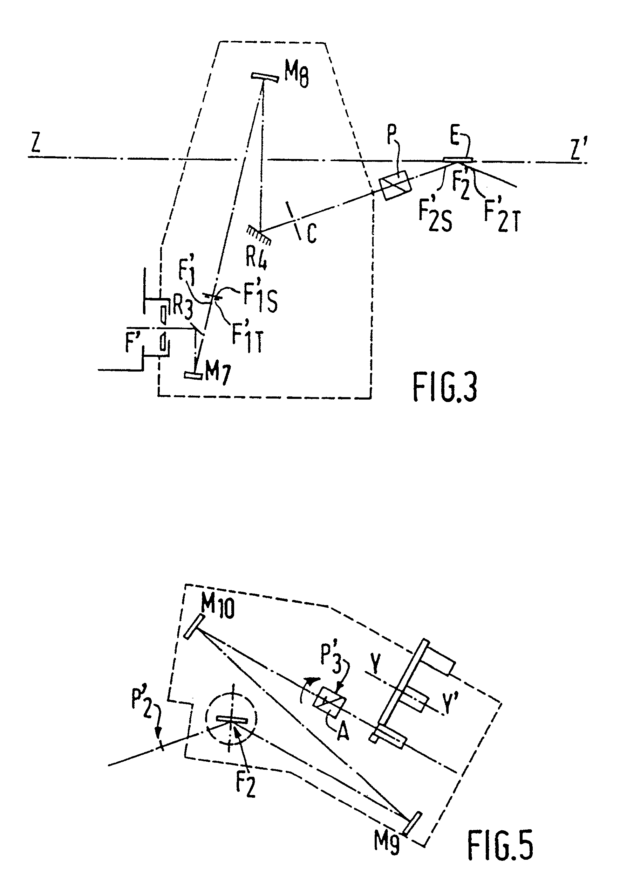

La figure 3 représente le bras optique d'éclairement, dont la fonction est, selon l'invention, de former sur la surface de l'échantillon une tache de faibles dimensions, par exemple de l'ordre de 10 microns. Du fait que l'ellipsomètre est du type spectroscopique, on utilise un dispositif mettant en oeuvre des miroirs sphériques. Comme les miroirs sphériques sont utilisés en incidence oblique, ils présentent un astigmatisme important. Les distance focales sagittale et tangentielle sont différentes. Si on utilise un montage optique conjuguant simplement la fente de sortie F' du monochromateur et un point $F'_2$ de la surface de l'échantillon, on obtient une image qui n'est pas au point en raison de l'astigmatisme des miroirs sphériques. La correction des effets dûs à l'astigmatisme est réalisée conformément à la figure 3. Celle-ci met en oeuvre deux miroirs sphériques $M_7$ et $M_8$, le miroir $M_7$ ayant pour fonction de former deux images intermédiaires $F'_{1T}$ et $F'_{1S}$ de la fente de sortie F' du monochromateur. L'image $F'_{1S}$ est reprise par le second miroir $M_8$ réglable qui la conjugue en deux images $F'_{2S}$ $F'_{2T}$ respectivement en amont et en aval de $F'_2$ et au voisinage proche de $F'_2$ avec la surface de l'échantillon. Une deuxième fente est située dans le plan de l'image $F'_{1S}$ et disposée perpendiculairement à celle-ci.

L'écartement contrôlé de ces deux fentes précitées permet de corriger les effets dûs à l'astigmatisme. Des miroirs plan de renvoi $R_3$ et $R_4$ permettent de replier le faisceau. L'encombrement de l'ensemble est en outre réduit en choisissant pour les miroirs $M_2$ et $M_8$ des distances focales telles que le système optique travaille en grandissement 2, ce qui permet en outre de disposer le polariseur fixe P à une distance convenable de l'échantillon, pour laquelle la section du faisceau lumineux correspond à celle du polariseur P.

Le polariseur fixe P est en calcite et est solidaire d'une commande de calibration constituée par un moteur pas à pas et permettant d'orienter le polariseur P préalablement à une mesure avec une précision d'un centième de degré. Sur le montage, a été également représenté un obturateur électronique C, situé entre le miroir de renvoi $R_4$ et le polariseur P. Cet obturateur C permet, lorsqu'il est en position fermée, de déterminer la composante continue, par exemple celle due au courant d'obscurité du détecteur, pour la soustraire du signal éllipsométrique.

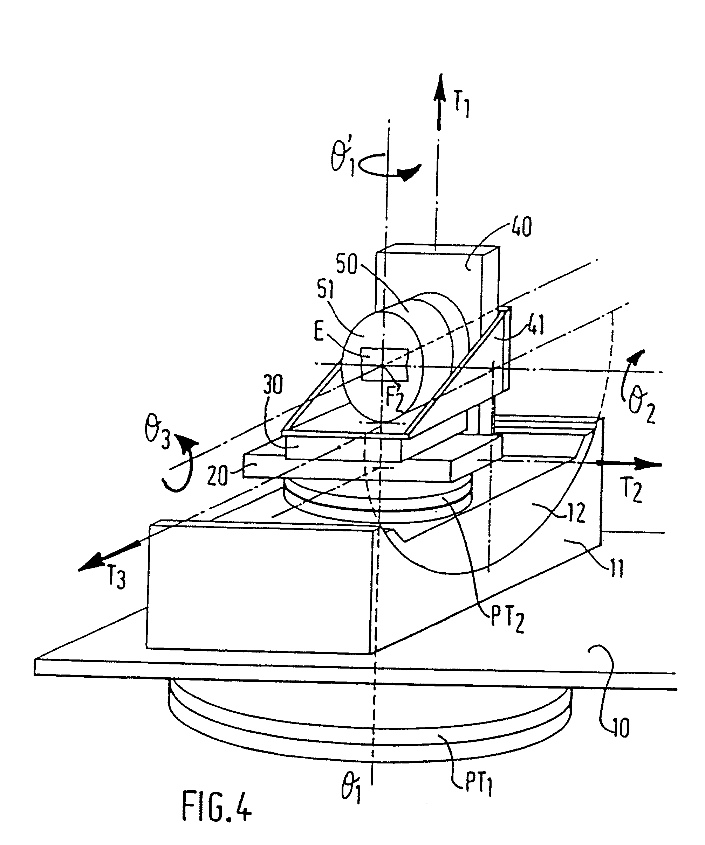

Selon la figure 4, le porte-échantillon présente deux degrés de liberté de rotation autour des axes $\theta_1$, $\theta_2$ et de préférence un troisième degré de liberté autour de l'axe $\theta_3$ et trois degrés de liberté de translation selon les axes $T_1$, $T_2$ et $T_3$.

Le premier degré de liberté de rotation est obtenu grâce à deux mouvements rotatifs coaxiaux. Le premier mouvement rotatif autour de l'axe $\theta_1$ qui passe par le point focal $F'_2$ est assuré par une platine tournante $PT_1$ commandée par une vis micrométrique non représentée. La platine $PT_1$ est solidaire d'une plaque 10 qui supporte à la fois le porte-échantillon proprement dit et le bras d'analyse qui sera décrit plus loin (figure 6). La rotation de la platine $PT_1$ permet de choisir l'angle d'incidence d'une manière qui sera décrite par la suite.

Une seconde platine tournante $PT_2$ tournant autour de l'axe $\theta'_1$ qui coïncide avec l'axe $\theta_1$ en position de réglage permet d'orienter l'échantillon sans changer l'angle d'incidence déterminé par la position de la première platine $PT_1$.

La seconde rotation autour d'un axe horizontal $\theta_2$ est obtenue avec une précision également du centième de degré par le déplacement d'un berceau goniométrique 12 tournant dans un support 11 monté sur la plaque 10.

L'axe $\theta_2$ coupe l'axe $\theta_1$ au point focal $F'_2$. Ceci a entre autres pour conséquence que l'axe $\theta'_1$ passe toujours par le point focal $F'_2$.

Le berceau goniométrique 11 porte la deuxième platine $PT_2$ qui elle-même porte le reste de l'appareillage assurant les trois translations selon les axes $T_1$, $T_2$, $T_3$ et la rotation autour de l'axe $\theta_3$. La translation selon l'axe $T_2$ parallèle à l'axe $\theta_2$ est assurée par une platine de translation 20 montée sur la platine tournante $PT_2$. La translation selon l'axe $T_3$ perpendiculaire à l'axe $T_2$ et à l'axe $\theta'_1$ est assurée par une platine de translation 30 montée sur la platine de translation 20. Enfin, la translation selon l'axe $T_1$ parallèle à l'axe $\theta'_1$ est assurée par une platine de translation 40 montée sur la platine de translation 30 par l'intermédiaire d'un étrier 41 et portant une platine tournante 50 d'axe $\theta_3$ parallèle à l'axe $T_3$. L'échantillon est fixé sur la face avant 51 de la platine tournante 50 dont la rotation permet de faire tourner l'échantillon sur lui-même. Ceci permet de présenter selon une orientation désirée un échantillon présentant des directions privilégiées (lignes de métallisation, etc...).

Les translations $T_1$ et $T_2$ assurées par des moteurs pas à pas avec un incrément de 0,1 micron permettent de réaliser une cartographie de l'échantillon, une fois que la surface de l'échantillon a été amenée en coïncidence avec le point focal $F'_2$ par action sur la translation $T_3$. L'action des translations $T_1$ et $T_2$ ne défait pas la mise au point. De même, le fait que les axes $\theta'_1$, $\theta_2$ passent par le point focal $F'_2$ a pour conséquence que le point de la surface de l'échantillon coïncidant avec $F'_2$ reste invariant quels que soient les réglages des trois rotations $\theta'_1$, $\theta_2$ et $\theta_3$.

Selon la figure 5, le bras d'analyse solidaire de la plaque mobile pouvant pivoter dans son plan autour de l'axe $\theta_1$ (platine $PT_1$) permet de modifier l'angle d'incidence mais également de mettre l'ellipsomètre en configuration "ligne droite" dans laquelle il n'y a plus de réflexion sur l'échantillon. Ceci permet d'aligner l'ensemble du système optique ainsi que de prendre la référence pour la mesure de l'angle d'incidence. Le bras d'analyse comporte le porte-échantillon ainsi qu'un système de détection comprenant une optique de détection comportant deux miroirs sphériques $M_9$ et $M_{10}$, ici de focale identique, montés en Z, un analyseur tournant, et une tourelle munie de différents détecteurs, d'un laser d'alignement et d'un microscope de visée.

Le miroir $M_9$ reprend le faisceau lumineux réfléchi par l'échantillon et le renvoie sur le miroir $M_{10}$ pour focalisation sur les détecteurs de la tourelle après passage à travers l'analyseur tournant A. L'angle d'incidence sur les miroirs $M_9$ et $M_{10}$ a été choisi aussi petit que possible, dans le cas d'espèce environ 6 degrés, afin de ne pas perturber la polarisation de la lumière réfléchie.

L'analyseur tournant A est en calcite et est monté dans l'arbre creux d'un moteur à courant continu. Un codeur optique est solidaire de l'axe du moteur.

La tourelle est mobile en rotation autour d'un axe YY' de manière à permettre de placer sur le trajet optique les différents détecteurs qu'elle porte, et couvrant différentes gammes spectrales, ainsi que le laser d'alignement et le microscope de visée. Les détecteurs sont placés légèrement en retrait du plan focal de manière à assurer un éclairement uniforme de chaque détecteur, à l'exception éventuelle des détecteurs dont la surface sensible est de faibles dimensions et qui peuvent être mis au plan focal.

Le microscope de visée, à faible grossissement, permet l'observation de l'échantillon à travers le système optique d'analyse, ainsi que le réglage de la position du miroir $M_8$ et de la fente $F'_1S$ du bras optique d'éclairement.

Le laser d'alignement, ici un laser He-Ne, permet d'aligner l'ensemble des pièces optiques Y compris le porte-échantillon.

Le signal I fourni par le détecteur est sinusoïdal, de fréquence double de celle de l'analyseur tournant. Si on désigne par A l'angle de l'analyseur tournant par rapport à l'axe p et par P l'angle du polariseur par rapport à l'axe p, on a :

$$I = k(1 + \alpha_0 \cos 2A + \beta_0 \sin 2A)$$

$$\text{avec} \qquad \alpha_0 = \frac{\tan^2\Psi - \tan^2P}{\tan^2\Psi + \tan^2P}$$

$$\beta_0 = \frac{2\tan\Psi \, \tan P \, \cos\Delta}{\tan^2\Psi + \tan^2P}$$

$\alpha_0$ et $\beta_0$ étant les coefficients de Fourier normalisés.
D'où il résulte :

$$\tan\Psi = \tan P \left(\frac{1+\alpha_0}{1-\alpha_0}\right)^{\frac{1}{2}}$$

$$\cos\Delta = \frac{\beta_0}{(1-\alpha^2_0)^{\frac{1}{2}}}$$

Ces deux dernières équations montrent que les mesures ellipsométriques peuvent en quelque sorte se résumer à des mesures d'angles. Pour que les mesures aient une bonne précision absolue, il importe que tous les angles, à savoir l'angle d'incidence, l'orientation du polariseur, et le repérage de la position de l'analyseur tournant soient correctement déterminés. L'orientation de l'échantillon est également importante, car elle détermine le plan d'incidence.

Nous allons maintenant décrire une procédure de calibration de l'ellipsomètre, le bras d'analyse, et donc le porte-échantillon étant mis en configuration dite de ligne droite. La première opération consiste à régler la position du miroir $M_8$ et de la fente $F'_1S$ du bras optique d'éclairement à l'aide du microscope de visée. En l'absence d'échantillon, le faisceau du laser situé sur la tourelle passe directement, sans être réfléchi à travers le système optique en trajet inverse. La position du bras d'analyse repérée par la platine tournante $PT_1$ pour laquelle le faisceau du laser passe par le centre de tous les miroirs est prise comme référence pour la mesure de l'angle d'incidence. L'axe optique étant ainsi matérialisé par le faisceau laser, on agit sur les rotations suivant les axes $\theta'_1$ et $\theta_2$ du porte-échantillon de manière à obtenir un parallélisme parfait entre la surface de l'échantillon et le faisceau laser, c'est-à-dire la condition d'incidence rasante. On agit ensuite sur la translation selon l'axe $T_3$ de manière à obturer la moitié du faisceau laser. Ceci amène en coïncidence le point focal $F'_2$ du bras d'éclairement avec un point de la surface de l'échantillon. Comme une action sur les rotations selon les axes $\theta'_1$, $\theta_2$, $\theta_3$ (de même qu'une action sur les translations $T_1$ et $T_2$) ne change pas la position de l'échantillon le long de l'axe $T_3$, le réglage peut être encore amélioré une fois la mise au point réalisée.

Après ces réglages, le bras d'analyse peut être tourné et mis en position de mesure. La rotation de la platine $PT_1$ étant mesurée avec une précision au centième de degré, l'angle d'incidence est alors déterminé avec précision.

Une orientation parfaite de la surface de l'échantillon peut être obtenue de préférence en étudiant le signal détecté en mettant le montage en configuration de mesure. L'analyseur tournant est mis en rotation avec une fréquence angulaire $\omega$. Le signal détecté est périodique de fréquence $2\omega$. Cependant, un positionnement incorrect de l'échantillon par rapport au plan d'incidence fait apparaître dans le signal des termes périodiques de fréquence $\omega$. On réalise donc l'alignement de l'échantillon en agissant sur les rotations $\theta_1$ et $\theta_2$ de manière à éliminer la composante parasite de fréquence $\omega$. L'examen visuel du signal sur un oscilloscope en superposant deux périodes du signal de fréquence $2\omega$ permet de mettre facilement en évidence toute composante de fréquence $\omega$.

Les degrés de liberté restants ($\theta_3$, $T_1$, $T_2$) ne changent plus l'orientation du plan de l'échantillon. Ils permettent de choisir le point à mesurer sur l'échantillon (translations $T_1$ et $T_2$) et de réaliser des cartographies de celui-ci, et dans le cas d'un échantillon présentant des motifs, d'aligner ces derniers (rotation $\theta_3$) parallèlement à une direction donnée, par exemple la direction horizontale ou verticale.

On peut donc résumer la fonction des degrés de liberté du porte-échantillon de la manière suivante :
- la rotation $\theta_1$ permet de régler l'angle d'incidence
- les rotations $\theta'_1$ et $\theta_2$ permettent d'orienter l'échantillon par rapport au trajet optique, par rotation de l'échantillon dans deux plans orthogonaux autour du point focal $F'_2$.
- la rotation $\theta_3$ permet la rotation de l'échantillon dans son propre plan autour de l'axe passant par le point focal $F'_2$.
- les translations $T_1$ et $T_2$ assurent le choix du point de l'échantillon que l'on désire mesurer.
- la translation $T_3$ permet d'amener l'échantillon dans le plan du point focal $F'_2$, ceci permettant de tenir compte des épaisseurs des différents échantillons.

La mise en place de l'échantillon une fois effectuée, il reste à repérer la position angulaire du polariseur et de l'analyseur. Ceci peut être fait en minimisant le résiduel R défini par :

$$R = 1 - \eta^2(\alpha^2 + \beta^2)$$

dans lequel $\eta^2$ est une coefficient d'atténuation apporté par l'électronique de détection qui filtre le signal délivré par le détecteur.

Pour mesurer le résiduel, le polariseur est mis manuellement au voisinage de la position p, soit en $p_0$. On mesure la valeur du résiduel et la phase du signal en $2N+1$ points équidistants dans l'intervalle $p_0-\Delta p_0$, $p_0 + \Delta p_0$. La variation du résiduel autour de son minimum est approximée par une fonction parabolique dont les coefficients sont calculés par la méthode des moindres carrés.

Cette procédure permet de positionner le polariseur avec une précision de l'ordre de ceux centièmes de degrés, et de déterminer tous les paramètres nécessaires pour pouvoir déduire à partir des coefficients de Fourier mesurés, les coefficients de Fourier corrigés de l'atténuation et du déphasage.

L'atténuation $\eta^2$ est déduite de la valeur minimale de R = $1-\eta^2$. Cette valeur dépend de la constante de temps de l'amplificateur et de la bande passante du détecteur. Pour un photomultiplicateur, dont la bande passante est très large eu égard à la fréquence de modulation, une constante de temps de 0,1 ms et une fréquence de rotation de 20 Hz pour l'analyseur tournant, la valuer minimale de R vaut environ 0,004.

7

Pour mesurer le déphasage, il suffit de remarquer que lorsque le polariseur est en position p = 0, les valeurs de α et β valent respectivement 1 et 0. La mesure des coefficients de Fourier α' et β' pour p = 0 donnent la valeur du déphasage φ :

$$\tan\phi = \frac{\alpha'}{\beta'}$$

Pour effectuer des mesures, le polariseur est décalé d'un angle donné de la position p = 0 déterminée dans la phase de calibration.

## Revendications

1. Ellipsomètre spectroscopique comportant un dispositif d'éclairement présentant un point focal F'₂ d'éclairement d'une surface d'un échantillon E selon un angle d'incidence donné, un dispositif d'analyse de la lumière réfléchie par la surface de l'échantillon ainsi qu'un porte-échantillon permettant d'amener un point de la surface de l'échantillon en coïncidence avec ledit point focal caractérisé en ce qu'il comporte trois platines de translation, à savoir une première (40) selon une première direction (T₁), une deuxième (20) selon une deuxième direction (T₂) perpendiculaire à la première (T₁) et horizontale, destinées à la réalisation de cartographies de l'échantillon, ainsi qu'une troisième platine de translation (30) selon une troisième direction (T₃) perpendiculaire aux deux autres directions, et destinée à placer un point de la surface de l'échantillon en coïncidence avec ledit point focal, en ce qu'il comporte au moins deux platines tournantes, une première (12) autour d'un premier axe (θ₂) parallèle à la deuxième direction horizontale (T₂) et une deuxième (PT2), autour d'un deuxième axe (θ'₁) parallèle à ladite première direction (T₁), ces deux axes se coupant en un point coïncidant avec ledit point focal d'éclairement, de telle sorte que l'échantillon puisse être orienté par rotation dans deux plans orthogonaux autour dudit point focal.

2. Ellipsomètre selon la revendication 1 caractérisé en ce que le porte-échantillon est monté sur un support rotatif (PT1) d'axe vertical (θ₁) passant pas ledit point focal F'₂, et sur lequel est monté ledit dispositif d'analyse, de telle sorte que l'angle d'incidence puisse être modifié.

3. Ellipsomètre selon une des revendications 1 ou 2 caractérisé en ce que le porte-échantillon comporte une troisième platine tournante (50) supportant l'échantillon, et comportant un troisième axe de rotation (θ₃) perpendiculaire aux premier (θ₂) et deuxième (θ'₁) axes, de manière à permettre une rotation de l'échantillon dans son plan.

4. Ellipsomètre selon une des revendications 1 à 3 caractérisé en ce que la deuxième platine tournante (PT2) est montée directement sur la première platine tournante (12), et en ce que les deuxième (20) et troisième (30) platines de translation sont superposées dans cet ordre sur la deuxième platine tournante (PT2), la troisième platine de translation (30) supportant la première platine de translation (40) dont l'échantillon est solidaire.

5. Ellipsomètre selon les revendications 3 et 4 prises ensemble, caractérisé en ce que la troisième platine tournante (50) est montée sur la première platine de translation (40).

## Claims

1. A spectroscopic ellipsometer comprising an illumination device having a focal point F'₂ for illuminating a surface of a sample E in accordance with a given angle of incidence, a device for analysing the light reflected from the surface of the sample and a sample support by which a point on the surface of the sample can be made to coincide with the said focal point, characterized in that it comprises three translation plates, namely a first plate 40 in accordance with a first direction T₁, a second plate 20 in accordance with a second direction T₂ perpendicular to the first direction T₁ and being horizontal, intended for realising cartographic representations of the sample, as well as a third translation plate 30 in accordance with a third direction T₃ perpendicular to the two other directions and intended for causing a point on the surface of the sample to coincide with the said focal point, and in that it comprises at least two rotary plates, a first 12 of which is rotatable about a first axis $\theta_2$ parallel to the second horizontal direction $T_2$ and a second PT2 of which is rotatable about a second axis $\theta'_1$ parallel to the said first direction $T_1$, said two axes intersecting each other at a point coinciding with the said focal point of the illumination, so that the sample can be oriented by rotation in two orthogonal planes about the said focal point.

2. An ellipsometer as claimed in Claim 1, characterized in that the sample support is mounted on a rotary support $PT_1$ having a vertical axis $\theta_1$ passing through the said focal point $F'_2$, on which support the said analysing device is mounted in such a way that the angle of incidence can be modified.

3. An ellipsometer as claimed in Claim 1 or 2, characterized in that the sample support comprises a third rotary plate 50 supporting the sample and having a third axis of rotation $\theta_3$ perpendicular to the first $\theta_2$ and second $\theta'_1$ axes so that the sample can be rotated in its own plane.

4. An ellipsometer as claimed in any one of Claims 1 to 3, characterized in that the second rotary plate PT2 is mounted directly on the first rotary plate 12 and in that the second 20 and third 30 translation plates are superposed in said order on the second rotary plate PT2, the third translation plate 30 supporting the first translation plate 40 with which the sample is integral.

5. An ellipsometer as claimed in Claims 3 and 4 taken together, characterized in that the third rotating plate 50 is mounted on the first translation plate 40.


**Ansprüche**

1. Spektralellipsometer mit einer Beleuchtungseinrichtung, die einen Brennpunkt $F'_2$ zum Beleuchten einer Probenfläche der Probe (E) unter einem vorgegebenen Einfallswinkel besitzt, mit einer Einrichtung zum Analysieren des von der Probenfläche zurückgeworfenen Lichts sowie mit einem Probenträger zum deckungsgleichen Einstellen eines Punktes auf der Probenfläche mit dem Brennpunkt, dadurch gekennzeichnet, daß das Meter drei Translationsplatten, d.h. eine erste Platte (40) für eine erste Richtung $(T_1)$, eine zweite Platte (20) für eine zweite Richtung $(T_2)$ senkrecht zur ersten Richtung $(T_1)$ und horizontal zur Verwirklichung kartographischer Probendaten sowie eine dritte Translationsplatte (30) für eine dritte Richtung $(T_3)$ mit senkrechtem Verlauf zu den zwei anderen Richtungen und geeignet zum deckungsgleichen Anbringen eines Punktes der Probe mit dem Brennpunkt, und das Meter wenigstens zwei Drehplatten enthält, von denen die erste Platte (12) sich um eine erste Achse $(\vartheta_2)$ parallel zur zweiten horizontalen Richtung $(T_2)$ und eine zweite Platte (PT2) sich um eine zweite Achse $(\vartheta'_1)$ parallel zur ersten Richtung $(T_1)$ drehen, wobei diese beiden Achsen sich in einem mit dem Beleuchtungs-Brennpunkt zusammenfallenden Punkt derart schneiden, daß die Probe durch Drehung in zwei orthogonalen Ebenen um den Brennpunkt ausrichtbar ist.

2. Ellipsometer nach Anspruch 1, dadurch gekennzeichnet, daß der Probenträger auf einen Drehtisch (PT1) angebracht ist, dessen Vertikalachse $(\vartheta_1)$ durch den Brennpunkt $F'_2$ geht, und auf diesem Tisch die Analysiereinrichting derart montiert ist, daß der Einfallswinkel abänderbar ist.

3. Ellipsometer nach Anspruch 1 oder 2, dadurch gekennzeichnet, daß der Probenträger eine dritte Drehplatte (50) zum Tragen der Probe enthält, und eine dritte Drehungsachse $(\vartheta_3)$ senkrecht zur ersten $(\vartheta_2)$ und zur zweiten Achse $(\vartheta'_1)$ besitzt, die eine Drehung der Probe in ihrer eigenen Ebene ermöglicht.

4. Ellipsometer nach einem der Ansprüche 1 bis 3, dadurch gekennzeichnet, daß die zweite Drehplatte (PT2) direkt auf der ersten Drehplatte (12) montiert ist, und daß die zweite (210) und die dritte Translationsplatte (30) in dieser Reihenfolge auf der zweiten Drehplatte (PT2) aufeinander gestellt sind, wobei die dritte Translationsplatte (30) die erste Translationsplatte (40) unterstützt, mit der die Probe verbunden ist.

5. Ellipsometer nach den zusammengenommenen Ansprüchen 3 und 4, dadurch gekennzeichnet, daß die dritte Drehplatte (50) auf der ersten Translationsplatte (40) montiert ist.

FIG.1

FIG.2

FIG.3

FIG.5

FIG.4